# EUROPEAN PATENT APPLICATION

(11) **EP 4 821 414 A1**
(43) Date of publication of application: **14.10.2026**
(21) Application number: 26171752.4
(22) Date of filing: 10.04.2026
(51) Int. Cl.: A47J 31/60, A47J 31/44, A47J 31/52

(54) **A BEVERAGE PREPARATION MACHINE COMPRISING AN OPTICAL SENSOR**

(30) Priority: 11.04.2025 TR 2025004306
(71) Applicant: Arçelik Anonim Sirketi, 34445 Istanbul (TR)
(72) Inventor: YILMAZ CETINER, Pelin, 34445 Istanbul (TR); KESKIN, Ege, 34445 Istanbul (TR); YILDIZ, Gizemnur, 34445 Istanbul (TR); BIRCI, Emine, 34445 Istanbul (TR); HATIPOGLU, Ozcan, 34445 Istanbul (TR)

(57) **Abstract**

The present invention relates to a beverage preparation machine (1) comprising a body (2); a water tank (3) located on the body (2) and suitable for being filled with water; and a brewing chamber (4) positioned on the body (2) so as to be in fluid communication with the water tank (3).

## Description

The present invention relates to a beverage preparation machine comprising an optical sensor used to determine the amount of limescale in a water tank.

The limescale contained in the water used in beverage preparation machines accumulates over time in the water tank. Limescale accumulation occurs as a result of dissolved minerals in the water, particularly calcium and magnesium ions, accumulating on heating surfaces and in pipes. When water is heated or evaporates, the dissolved minerals precipitate in the form of limescale (calcium carbonate, CaCO₃). This process causes the limescale accumulation to form a thick layer over time. This situation leads to various problems. These problems can mainly be classified as heat transfer and energy consumption, maintenance costs, a decrease in water flow rate, and the occurrence of flavor and taste issues in hot beverage preparation machines. The limescale layer accumulates on heat transfer surfaces and prevents heat from being transferred effectively. This reduces the efficiency of heating systems. A decrease in heat transfer efficiency causes more energy to be consumed in order to obtain the same amount of heat and increases energy costs. In addition, due to limescale accumulation, the equipment in beverage preparation machines fails more frequently. This leads to an increase in maintenance costs. If periodic maintenance and preventive measures are not taken, the accumulation of limescale in the internal pipes of the beverage preparation machine causes the inner diameter of the pipes to narrow, and the water flow rate decreases. This reduces the efficiency of the water system. The reduced water flow adversely affects the transfer of water to the coffee and the extraction, especially in coffee makers. The heat transfer and water system problems caused by limescale accumulation prevent the coffee aroma and taste from being fully developed. With the formation of limescale, the chemical composition of the water changes. Apart from all these adverse effects, limescale accumulation causes stains on the internal and external surfaces of the beverage preparation machine. This leads to a visual perception among users that the beverage preparation machine is not clean and not hygienic. In the state of the art, there are beverage preparation machines wherein the amount of limescale accumulated in the water tank is detected indirectly. However, in said beverage preparation machines, the amount of limescale accumulation cannot be determined directly and effectively. Therefore, there is a need for a beverage preparation machine wherein the amount of limescale accumulated in the water tank is detected directly and rapidly.

In the state of the art European Patent Application No. EP4033161A1, a beverage preparation machine is disclosed, wherein the amount of limescale is determined.

The aim of the present invention is the realization of a beverage preparation machine wherein the amount of limescale accumulated in the water tank is determined effectively.

The beverage preparation machine realized in order to attain the aim of the present invention, explicated in the first claim and the respective claims thereof, comprises a body; a water tank; and a brewing chamber. The beverage preparation machine is preferably a coffee maker. The water contained in the water tank is heated by a heater and delivered to the brewing chamber. In the brewing chamber, preferably coffee is brewed. The beverage preparation machine comprises a control unit which controls the operation. The beverage preparation machine comprises an optical sensor configured to transmit a beam into the water tank and to detect the reflection of the transmitted beam. The optical sensor provides different outputs when there is no limescale in the water tank and after limescale begins to form in the water tank. The optical sensor may be a time-of-flight sensor or a laser sensor. The limescale accumulated on the inner wall of the water tank changes the reflection time or angle of the beams transmitted from the optical sensor. The data obtained from the optical sensor is evaluated by the control unit. The control unit directly determines the amount of limescale in the water tank based on the data obtained from the optical sensor. Thus, the amount of limescale in the water tank can be determined easily and directly by means of the data obtained from the optical sensor.

In an embodiment of the present invention, when the control unit determines that the amount of limescale in the water tank exceeds a predetermined first threshold value, a first washing program is initiated. In the preferred version of the present invention, when the control unit determines that the amount of limescale in the water tank exceeds a predetermined first threshold value, the control unit first provides a warning to the user. In the warning provided to the user, the initiation of the first washing program is recommended. The first threshold value corresponds to the first level at which limescale begins to accumulate in the water tank and cleaning is required. Thus, the user is informed of the limescale accumulation level and, since a washing program appropriate to the relevant limescale accumulation level is initiated, the cleaning process is performed efficiently.

In another embodiment of the present invention, when the control unit determines that the amount of limescale in the water tank exceeds a predetermined second threshold value, a second washing program is initiated. In the preferred version of the present invention, when the control unit determines that the amount of limescale in the water tank exceeds the predetermined second threshold value, the control unit first provides a warning to the user. In the warning provided to the user, the initiation of the second washing program is recommended. The second threshold value corresponds to a limescale accumulation amount higher than the limescale accumulation amount at the first threshold value. Thus, the user is informed of the limescale accumulation level and, since a washing program appropriate to the relevant limescale accumulation level is initiated, the cleaning process is performed efficiently.

In another embodiment of the present invention, the amount of water used in the second washing program is greater than the amount of water used in the first washing program. The second washing program is configured to remove a greater amount of limescale accumulation compared to the first washing program. Since the dissolution of limescale is directly proportional to the amount of water, a greater amount of water is used in the second washing program. Thus, since the washing programs are determined in accordance with the determined limescale amount, the limescale in the water tank is removed so as to ensure energy efficiency.

In another embodiment of the present invention, the temperature of the water used in the second washing program is greater than the temperature of the water used in the first washing program. The second washing program is configured to remove a greater amount of limescale accumulation compared to the first washing program. Since the dissolution of limescale is directly proportional to the temperature of the water used in the washing process, water at a higher temperature is used in the second washing program. Thus, since the washing programs are determined in accordance with the determined limescale amount, the limescale in the water tank is removed so as to ensure energy efficiency.

In another embodiment of the present invention, when the control unit determines that the amount of limescale in the water tank exceeds a predetermined first threshold value or a predetermined second threshold value, the control unit provides a warning to the user. Thus, the user is enabled to be informed about the amount of limescale in the water tank.

In another embodiment of the present invention, at least a portion of the water tank is manufactured from a light-transmitting material. The optical sensor is positioned outside the water tank so as to transmit a beam onto the wall of the water tank manufactured from the light-transmitting material. Thus, the optical sensor is prevented from being damaged by being affected by the moisture of the water contained in the water tank.

In another embodiment of the present invention, the optical sensor is an infrared sensor. Thus, the amount of limescale in the water tank is determined efficiently and cost-effectively.

In another embodiment of the present invention, the water tank comprises a cleaning member housing. A cleaning member is placed in the cleaning member housing so as to be used in the first washing program and/or the second washing program. The cleaning member is a chemical substance that increases limescale removal performance. Thus, the limescale removal performance of the washing program is improved.

In another embodiment of the present invention, whether a cleaning member is present in the cleaning member housing is determined by the control unit based on the data obtained from the optical sensor. The optical sensor is configured to transmit a beam to the cleaning member housing and to detect the light reflected from the cleaning member housing. Thus, whether a cleaning member is present in the cleaning member housing is determined directly and cost-effectively.

In another embodiment of the present invention, when the control unit determines that the amount of limescale in the water tank exceeds the first threshold value and that a cleaning member is not present in the cleaning member housing, the control unit provides a warning to the user to initiate a third washing program preprogrammed by the manufacturer in order to remove the determined amount of limescale from the water tank. The third washing program is a washing program having a water amount and a water temperature that enable the limescale accumulation in the water tank to be removed without the need for any cleaning member. Thus, the water tank is enabled to be cleaned effectively.

In another embodiment of the present invention, when the control unit determines that a cleaning member is not present in the cleaning member housing, the control unit sends a visual and/or audible warning to the user. Thus, the user is enabled to be informed quickly and effectively about the cleaning member amount.

By means of the present invention, a beverage preparation machine is realized, wherein the amount of limescale in the water tank is determined directly and the water tank is cleaned efficiently by means of the washing programs prepared in accordance with the determined amount of limescale.

The beverage preparation machine realized in order to attain the aim of the present invention is illustrated in the attached figures, where:

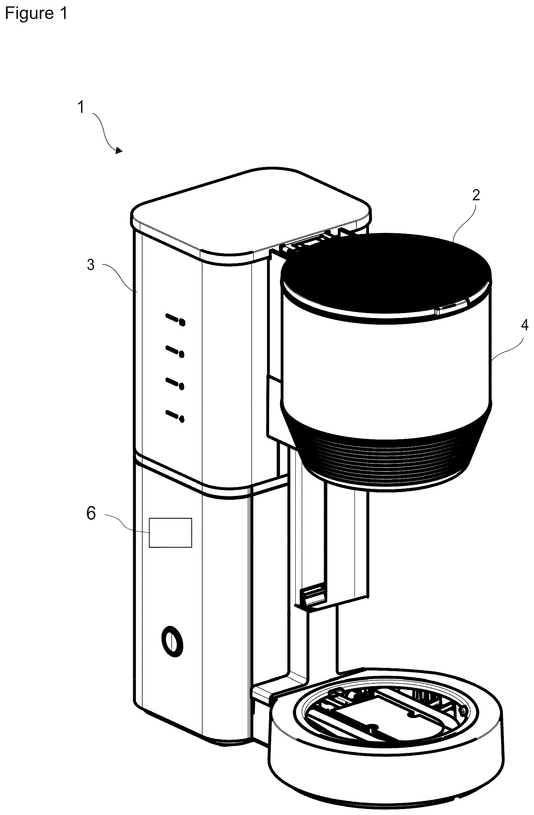

Figure 1 - is the perspective view of the beverage preparation machine related to an embodiment of the present invention.

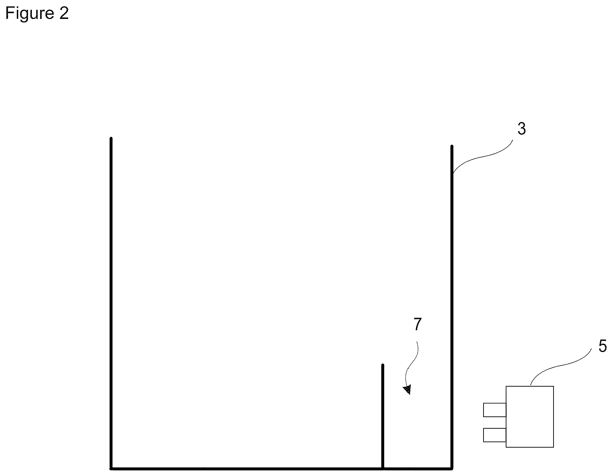

Figure 2 - is the schematic view of the beverage preparation machine related to another embodiment of the present invention.
   1. Beverage preparation machine
   2. Body
   3. Water tank
   4. Brewing chamber
   5. Optical sensor
   6. Control unit
   7. Cleaning member housing

The beverage preparation machine (1) comprises a body (2); a water tank (3) located on the body (2) and suitable for being filled with water; and a brewing chamber (4) positioned on the body (2) so as to be in fluid communication with the water tank (3). The water in the water tank (3) is heated, preferably by means of a heater, and is then delivered to the brewing chamber (4). After being prepared in the brewing chamber (4), the beverage is sent out of the brewing chamber (4) through an outlet opening.

The beverage preparation machine (1) of the present invention comprises an optical sensor (5) configured to transmit a beam into the water tank (3) and to detect the reflection of the beam transmitted to the water tank (3), and a control unit (6) configured to determine the amount of limescale in the water tank (3) based on the data obtained from the optical sensor (5). The optical sensor (5) has an optical transmitter configured to transmit a beam and an optical receiver configured to detect the reflection of the transmitted beam. When a beam is transmitted into the water tank (3) by the optical sensor (5), at least a portion of said beam is reflected from the water tank (3) and returns to the optical sensor (5). In the absence of any limescale residue in the water tank (3), in other words when the water tank (3) is clean, the data obtained from the optical sensor (5) is recorded as a reference value. Over time, as limescale accumulation begins to form in the water tank (3), the data obtained from the optical sensor (5) changes. The data obtained from the optical sensor (5) is evaluated by the control unit (6) that controls the operation. After the data obtained from the optical sensor (5) is compared with the reference value stored in the memory of the control unit (6), the amount of limescale accumulated in the water tank (3) is determined. The control unit (6) preferably determines the amount of limescale in three levels, namely low, medium, and high. When the data obtained from the optical sensor (5) is higher than a first threshold value predetermined by the manufacturer, the limescale amount is determined as low; when higher than a second threshold value predetermined by the manufacturer, the limescale amount is determined as medium; and when higher than a third threshold value predetermined by the manufacturer, the limescale amount is determined as high. The second threshold value is higher than the first threshold value. The third threshold value is higher than the second threshold value. At the beginning of each operating cycle, the control unit (6) activates the optical sensor (5) and collects data. Thus, the amount of limescale in the water tank (3) is determined quickly and effectively by the control unit (6).

In an embodiment of the present invention, the beverage preparation machine (1) comprises the control unit (6) configured to, when it is determined that the amount of limescale in the water tank (3) exceeds a predetermined first threshold value, initiate a first washing program preprogrammed by the manufacturer in order to remove the determined amount of limescale from the water tank (3). The first threshold value is determined by the manufacturer as the lowest level at which limescale residues accumulated in the water tank (3) are required to be cleaned. In order to remove the limescale amount exceeding the first threshold value, a first washing program predetermined by the manufacturer is initiated. The first washing program is initiated by the control unit (6). Thus, the limescale is removed effectively without waiting for the limescale amount to accumulate to a very high level.

In another embodiment of the present invention, the beverage preparation machine (1) comprises the control unit (6) configured to, when it is determined that the amount of limescale in the water tank (3) exceeds a predetermined second threshold value that is higher than the first threshold value, initiate a second washing program preprogrammed by the manufacturer in order to remove the determined amount of limescale from the water tank (3). The second threshold value is a threshold value at which the amount of limescale accumulated in the water tank (3) is higher than the first threshold value. In order to remove the limescale amount exceeding the second threshold value, a second washing program predetermined by the manufacturer is initiated. The second washing program is initiated by the control unit (6). Thus, the limescale residues accumulated in the water tank (3) are removed effectively.

In another embodiment of the present invention, the beverage preparation machine (1) comprises the second washing program wherein a greater amount of water is used than in the first washing program. The first washing program is initiated when the amount of limescale in the water tank (3) exceeds the first threshold value. The second washing program is initiated when the amount of limescale in the water tank (3) exceeds the second threshold value that is higher than the first threshold value. Therefore, when the second washing program is initiated, the amount of limescale to be removed is greater. By using a greater amount of water in the second washing program than in the first washing program, the limescale is removed more effectively.

In another embodiment of the present invention, the beverage preparation machine (1) comprises the second washing program performed with water at a higher temperature than the water used in the first washing program. The first washing program is initiated when the amount of limescale in the water tank (3) exceeds the first threshold value. The second washing program is initiated when the amount of limescale in the water tank (3) exceeds the second threshold value that is higher than the first threshold value. Therefore, when the second washing program is initiated, the amount of limescale to be removed is greater. As the temperature of the water used in the washing process increases, the dissolution of limescale also increases. Therefore, by ensuring that temperature of the water used in the second washing program is higher than the temperature of the water used in the first washing program, the limescale removal process is performed more efficiently.

In another embodiment of the present invention, the beverage preparation machine (1) comprises the control unit (6) configured to provide a warning to the user when it is determined that the amount of limescale in the water tank (3) exceeds a predetermined first threshold value or a predetermined second threshold value. The control unit (6) provides the warning to the user in the form of a visual and/or audible warning.

In another embodiment of the present invention, the beverage preparation machine (1) comprises the water tank (3) manufactured at least partially from a light-transmitting material and the optical sensor (5) positioned outside the water tank (3). The optical sensor (5) is positioned outside the water tank (3) so as to transmit a beam onto the portion of the water tank (3) manufactured from the light-transmitting material. Thus, the optical sensor (5) is prevented from being affected by the water in the water tank (3).

In another embodiment of the present invention, the beverage preparation machine (1) comprises the optical sensor (5) configured to transmit an infrared beam. Thus, the operation of the optical sensor (5) is prevented from being affected by ambient light.

In another embodiment of the present invention, the beverage preparation machine (1) comprises a cleaning member housing (7) located in the water tank (3) and suitable for receiving a cleaning member to be used in a washing program that enables the cleaning of the water tank (3). The cleaning member is a descaling tablet or a descaling solution. Thus, the limescale removal performance of the washing program is increased.

In another embodiment of the present invention, the beverage preparation machine (1) comprises the optical sensor (5) configured to transmit a beam to the cleaning member housing (7) and to detect the reflection of the beam transmitted to the cleaning member housing (7), and the control unit (6) configured to determine the presence of the cleaning member in the cleaning member housing (7) based on the data obtained from the optical sensor (5). The cleaning member housing (7) is located on the portion of the water tank (3) manufactured from a light-transmitting material. The optical sensor (5) provides different data depending on whether a cleaning member is present in the cleaning member housing (7) or not. Based on the data obtained from the optical sensor (5), the control unit (6) easily determines whether a cleaning member is present in the cleaning member housing (7).

In another embodiment of the present invention, the beverage preparation machine (1) comprises the control unit (6) configured to, when it is determined that the amount of limescale in the water tank (3) exceeds the first threshold value and that a cleaning member is not present in the cleaning member housing (7), initiate a third washing program preprogrammed by the manufacturer in order to remove the determined amount of limescale from the water tank (3). When it is determined that the amount of limescale exceeds the first threshold value, the first washing program is initiated. However, in the first washing program, the cleaning member is preferably used. When it is determined that a cleaning member is not present in the cleaning member housing (7), a third washing step is performed by the control unit (6), wherein a greater amount of water is used compared to the first washing step. Thus, a washing program is initiated wherein the amount and temperature of the water are determined so as to enable the limescale in the water tank (3) to be removed without the use of a cleaning member. Thus, the amount of limescale in the water tank (3) is enabled to be removed efficiently.

In another embodiment of the present invention, the beverage preparation machine (1) comprises the control unit (6) configured to provide a warning to the user when it is determined that the amount of limescale in the water tank (3) exceeds the first threshold value and that a cleaning member is not present in the cleaning member housing (7). Thus, the user is enabled to be informed about the absence of the cleaning member.

By means of the present invention, a beverage preparation machine (1) is realized wherein the amount of limescale residue on the wall of the water tank (3) is determined quickly and effectively by means of an optical sensor (5) configured to transmit a beam into the water tank (3) and to detect the reflection of the beam transmitted into the water tank (3).

## Claims

1. A beverage preparation machine (1) **comprising** a body (2); a water tank (3) located on the body (2) and suitable for being filled with water; and a brewing chamber (4) positioned on the body (2) so as to be in fluid communication with the water tank (3), **characterized by** an optical sensor (5) configured to transmit a beam into the water tank (3) and to detect the reflection of the beam transmitted to the water tank (3), and a control unit (6) configured to determine the amount of limescale in the water tank (3) based on the data obtained from the optical sensor (5).

2. A beverage preparation machine (1) as in Claim 1, **characterized by** the control unit (6) configured to, when it is determined that the amount of limescale in the water tank (3) exceeds a predetermined first threshold value, initiate a first washing program preprogrammed by the manufacturer in order to remove the determined amount of limescale from the water tank (3).

3. A beverage preparation machine (1) as in Claim 2, **characterized by** the control unit (6) configured to, when it is determined that the amount of limescale in the water tank (3) exceeds a predetermined second threshold value that is higher than the first threshold value, initiate a second washing program preprogrammed by the manufacturer in order to remove the determined amount of limescale from the water tank (3).

4. A beverage preparation machine (1) as in Claim 3, **characterized by** the second washing program wherein a greater amount of water is used than in the first washing program.

5. A beverage preparation machine (1) as in Claim 3 or Claim 4, **characterized by** the second washing program performed with water at a higher temperature than the water used in the first washing program.

6. A beverage preparation machine (1) as in any one of the above claims, **characterized by** the control unit (6) configured to provide a warning to the user when it is determined that the amount of limescale in the water tank (3) exceeds a predetermined first threshold value or a predetermined second threshold value.

7. A beverage preparation machine (1) as in any one of the above claims, **characterized by** the water tank (3) manufactured at least partially from a light-transmitting material and the optical sensor (5) positioned outside the water tank (3).

8. A beverage preparation machine (1) as in any one of the above claims, **characterized by** the optical sensor (5) configured to transmit an infrared beam.

9. A beverage preparation machine (1) as in any one of the above claims, **characterized by** a cleaning member housing (7) located in the water tank (3) and suitable for receiving a cleaning member to be used in a washing program that enables the cleaning of the water tank (3).

10. A beverage preparation machine (1) as in Claim 9, **characterized by** the optical sensor (5) configured to transmit a beam to the cleaning member housing (7) and to detect the reflection of the beam transmitted to the cleaning member housing (7), and the control unit (6) configured to determine the presence of the cleaning member in the cleaning member housing (7) based on the data obtained from the optical sensor (5).

11. A beverage preparation machine (1) as in Claim 2 and Claim 10, **characterized by** the control unit (6) configured to, when it is determined that the amount of limescale in the water tank (3) exceeds the first threshold value and that a cleaning member is not present in the cleaning member housing (7), initiate a third washing program preprogrammed by the manufacturer in order to remove the determined amount of limescale from the water tank (3).

12. A beverage preparation machine (1) as in Claim 2 and Claim 10, **characterized by** the control unit (6) configured to provide a warning to the user when it is determined that the amount of limescale in the water tank (3) exceeds the first threshold value and that a cleaning member is not present in the cleaning member housing (7).
